# FASCICULE DE BREVET EUROPEEN

(11) **EP 4 422 861 B1**
(45) Date de publication et mention de la délivrance du brevet: **04.03.2026**
(21) Numéro de dépôt: 22805917.6
(22) Date de dépôt: 25.10.2022
(51) Int. Cl.: B32B 7/06, B32B 15/20, B65D 41/04, B65D 53/04

(54) **JOINT DOUBLE PIECE THERMOSCELLABLE COMPRENANT UN OPERCULE PELABLE**
HEISSSIEGELBARE ZWEITEILIGE DICHTUNG MIT ABZIEHBAREM DECKEL
HEAT-SEALABLE TWO-PIECE SEAL COMPRISING A PEELABLE LID

(30) Priorité: 26.10.2021 FR 2111349
(43) Date de publication de la demande: 04.09.2024
(73) Titulaire: SELIG FRANCE, 69380 Chazay D'Azergues (FR)
(72) Inventeur: TRIQUET, Stéphane, 69380 Chazay-D'Azergues (FR); BISCHOFF, Rémy, 69380 Chazay-D'Azergues (FR)
(74) Mandataire: Gill Jennings & Every LLP
(86) Numéro de dépôt international: PCT/FR2022/052019
(87) Numéro de publication internationale: WO 2023/073316

(56) Documents cités:
- FR-A1- 2 693 986
- US-A- 4 588 099
- US-A- 4 917 949

## Description

L'invention se rattache au secteur technique des moyens d'obturation de récipients en verre notamment, à fermeture par bouchon ou capsule, en particulier dans le domaine des produits alimentaires secs tels que cafés lyophilisés ou encore pâte à tartiner, sans que ce soit limitatif. Elle concerne plus précisément un joint double pièce comprenant un opercule pelable. L'étanchéité des récipients à fermeture par bouchon ou capsule, préalablement à leur première ouverture, peut être effectuée au moyen d'un joint double pièce ou, dans certains cas, d'un simple opercule qui peut être collable ou scellable, sur le buvant.

L'invention, telle que définie dans la revendication 1, concerne un joint double pièce uniquement.

Un joint double pièce est constitué d'un opercule mis en place sur tout le pourtour du rebord supérieur du col du récipient ou buvant, isolant de la sorte le récipient de l'extérieur, et d'autre part, d'un support généralement plus épais, inséré, sans être pour autant fixé, au fond du bouchon. Préalablement à la première ouverture du récipient, le support et l'opercule peuvent être solidarisés par le biais d'un adhésif temporaire.

Le rôle de l'opercule est tout d'abord de conférer une inviolabilité du récipient avant la première ouverture. En outre, il assure l'étanchéité primaire vis-à-vis de l'extérieur. De plus, il doit développer certaines propriétés de compatibilité avec le contenu qu'il est sensé isoler et par exemple être de qualité alimentaire dès que le contenu est lui-même alimentaire.

Le support, quant à lui, est destiné à absorber les tolérances entre le fond de la capsule et/ou du bouchon et la partie supérieure du col du récipient, et en outre, à assurer l'étanchéité secondaire dès lors que l'opercule a été en tout ou partie retiré. Il est donc susceptible d'assurer une certaine compression avec effet mémoire pour justement permettre d'absorber ces tolérances.

En pratique, le joint est inséré au fond de la capsule ou du bouchon. Une fois le récipient rempli, on vient visser ou clipser le bouchon ou la capsule munie du joint sur le récipient. La partie opercule du joint se trouve alors au contact du buvant.

Lorsque que l'on procède pour la première fois à l'ouverture du récipient, le support inséré au fond du bouchon se désolidarise de l'opercule resté scellé sur le buvant. Ce n'est qu'ensuite que l'opercule est retiré par le consommateur, l'étanchéité, en position fermée du récipient, n'étant plus alors assurée que par la partie support du joint venant plaquer par compression sur le buvant.

Le scellage de l'opercule sur le buvant est effectué par collage ou thermoscellage par induction au moyen d'un film ou d'un vernis thermoscellant.

L'invention se limite à un joint double pièce thermoscellable, ce qui signifie que la solidarisation de l'opercule sur le buvant est réalisée par thermoscellage par induction comme ci-dessus mentionné et non par collage.

Le thermoscellage est rendu possible par l'action combinée d'un matériau conducteur, inséré dans l'épaisseur du joint, qui, sous l'effet d'une induction électrique s'échauffe, entrainant le ramollissement du film ou du vernis de scellage sur le buvant. Le matériau conducteur peut être inséré soit dans le support, soit dans l'opercule. Le plus souvent, il est inséré dans l'épaisseur de l'opercule. En pratique, il a une épaisseur d'au moins 12 micromètres pour assurer la conduction de la chaleur.

Les documents EP 2 045 194 Al et WO 2010/115811 décrivent par exemple des joints double pièces dont la partie opercule intègre une feuille d'aluminium comme matériau conducteur. Un premier inconvénient de l'art antérieur réside dans le fait que le pelage de l'opercule ne peut se faire en une étape car l'aluminium se déchire au moment dudit pelage.

En effet le consommateur a pour habitude d'arracher l'opercule soit en saisissant le bord de celui-ci, soit en le perçant sensiblement en son centre. Dans tous les cas, le pelage de l'opercule ne peut se faire en une fois.

Un second inconvénient qui est une conséquence du premier réside dans le fait que l'arrachage de l'aluminium génère la présence de résidus métalliques à la surface du buvant, qui sont susceptibles de tomber à l'intérieur du récipient et donc de contaminer le contenu.

Le premier problème que se propose de résoudre l'invention est donc celui de mettre au point un opercule qui puisse être pelé sans laisser de traces métalliques sur le buvant, idéalement un opercule pelable en une fois.

Ce problème à résoudre s'accompagne d'une contrainte supplémentaire qui résulte des usages où habitudes des consommateurs, puisque comme mentionné ci-avant, certains d'entre eux ont pour habitude d'ouvrir l'opercule en perçant celui-ci avec leurs doigts puis d'arracher progressivement les lambeaux d'aluminium.

Le document US 4 917 949 A décrit un joint double pièce thermoscellant comportant un support et un opercule typiquement en aluminium. Le support et l'opercule sont fixés ensemble par un adhésif temporaire. Une couche de 12,7 µm d'épaisseur, en polyester, est fixée sur la feuille d'aluminium puis une couche adhésive thermoscellable est fixée à la couche de polyester. Le document indique que la couche de renfort est utilisée pour renforcer la solidité de la couche d'aluminium L'épaisseur de la couche en polyester associée à la couche d'aluminium rend donc impossible le perçage de l'opercule avec le doigt.

Le document FR 2 693 986 A1 décrit un opercule multicouche destiné à obturer le col d'un récipient, et gui comprend en général, accessoirement un disque métallique et un disque en matière synthétique étant destiné à être soudé au col du récipient au cours d'un processus d'induction auquel est soumis l'opercule en contact avec le récipient.

La solution au problème posé doit donc tenir compte de cet état de fait pour ne pas perturber les habitudes des consommateurs surtout lorsqu'il s'agit de produits de grande consommation que sont parexemple le café lyophilisé ou encore la pâte à tartiner.

Parconséquent, le problème que se propose de résoudre l'invention est celui de mettre au point un joint double pièce, dont l'opercule puisse être pelé idéalement en une fois, sans laisser de traces métalliques sur le buvant, tout en étant susceptible d'être percé par les doigts du consommateurau moment de l'ouverture.

À cet effet, il a été mis au point un joint double pièce thermoscellant pour l'obturation d'un récipient à fermeture par bouchon ou capsule, comprenant un support rendu solidaire au moyen d'un adhésif temporaire, d'un opercule dépourvu de languette et comprenant une feuille en matériau conducteur.

Selon l'invention, la feuille en matériau conducteur est munie sur sa face inférieure d'un film de renfort d'une épaisseur inférieure à 6 µm, sur la face inférieure duquel est appliqué un film thermoscellant destiné à être en contact avec le buvant dudit récipient.

Selon l'invention, un film de renfort est appliqué sous la feuille en matériau conducteur permettant ainsi d'éviter le dépôt de résidus métalliques sur le buvant au moment du pelage, le tout combiné avec une épaisseur spécifique dudit film de renfort rendant possible le perçage de l'opercule par le consommateur.

Selon l'invention, le film de renfort a une épaisseur inférieure à 6 µm. En effet, il doit être suffisamment épais pour ne pas se déchirer au moment du pelage mais suffisamment fin pour rester perçable. En pratique, le film de renfort a une épaisseur comprise entre 4 et 6 µm, avantageusement égale à 4.5 µm.

Selon une autre caractéristique, le film de renfort est réalisé en un matériau choisi dans le groupe comprenant le polyester (PET), le polypropylène bi-orienté, le polyamide bi-orienté et le PET bi-orienté.

Dans un mode de réalisation préféré, le film de renfort est un film PET et a une épaisseur comprise entre 4 et 5 µm.

Selon une caractéristique essentielle de l'invention, l'opercule contient une feuille en matériau conducteur. En pratique il s'agit d'une feuille en aluminium.

Pour que le joint double pièce de l'invention soit thermoscellable, il est nécessaire que la feuille en matériau conducteur, en l'espèce la feuille d'aluminium présente une épaisseur suffisante. En pratique, l'épaisseur de la feuille est comprise entre 20 et 40 micromètres, avantageusement entre 10 et 30 micromètres.

En pratique, le film de renfort, et de manière générale les couches constitutives du support et/ou de l'opercule, peuvent être associées directement l'une à l'autre ou par le biais d'une couche de liant. Dans tous les cas, la liaison est de préférence permanente de sorte que les couches constitutives de l'opercule et/ou du support ne sont pas séparables.

Pour faire adhérer l'opercule sur le buvant du récipient, la face inférieure du film de renfort est munie d'un film thermoscellant. Le film thermoscellant est réalisé en un matériau du type polyoléfine, choisi dans le groupe comprenant l'EVA, le polyéthylène, le polypropylène ou PET, du type holt melt ou encore du type terpolymère ou ionomère. De manière générale, le matériau constitutif du film thermoscellant est choisi en fonction de la nature du pot.

Le film thermoscellant peut être un film monocouche appliqué sur la face inférieure du film de renfort par extrusion. Il peut également s'agir d'un film bicouche (une couche inférieure thermoscellante proprement dite et une couche supérieure liante) appliqué sur la face inférieure du film de renfort par coextrusion.

L'opercule a, en pratique, une épaisseur comprise entre 20 et 200 µm, de préférence comprise entre 30 et 120 µm.

Selon l'invention, l'opercule du joint double pièce contient avantageusement 3 couches seulement, respectivement de bas en haut, une couche thermoscellante, le film de renfort et la feuille en matériau conducteur. Dans certains cas, la face supérieure de la feuille en matériau conducteur est recouverte d'une impression appliquée par une opération de prélaquage puis de surlaquage.

Le support peut être réalisé en tout type de matériau compressible avec mémoire de reprise, notamment en polyéthylène expansé ou en polypropylène expansé, éventuellement muni sur au moins une de ses deux faces, d'un film de polypropylène ou polyéthylène pour lui conférer une certaine rigidité. Il peut également être réalisé en papier ou carton.

En pratique, les supports envisagés ont une épaisseur comprise entre 0,5 et 4 mm, avantageusement entre 0,8 et 2 mm.

S'agissant de la solidarisation temporaire entre le support et l'opercule, celle-ci peut être obtenue au moyen d'un adhésif temporaire appliqué sous forme d'un film, de préférence extrudé ou coextrudé, chacune des deux faces de la couche ayant un pouvoir collant différent, la face la plus collante étant appliquée sur la surface inférieure du support, tandis que la face la moins collante est appliquée sur la face supérieure de l'opercule. En pratique, un tel film est à base de polymère, en général synthétique, et choisi judicieusement par l'homme du métier, de manière à obtenir les propriétés recherchées de collage différentiel. De tels polymères sont par exemple des polymères ou copolymères à base d'acétate, d'acrylate, de polyéthylène ...

L'adhésif temporaire peut également se présenter sous la forme d'une couche de cire.

L'opercule et le joint double pièce de l'invention sont plus particulièrement adaptés pour l'obturation d'un récipient en verre à fermeture par bouchon ou capsule contenant des produits secs, tels que cafés lyophilisés ou encore pâte à tartiner.

L'invention et les avantages qui en découlent ressortiront mieux de l'exemple qui suit et qui constitue un mode de réalisation préféré.

Un joint selon l'invention est un joint thermoscellable double pièce. Le joint est constitué d'un support et d'un opercule dépourvu de languette.

Le support comprend une couche réalisée en polypropylène ou polyéthylène expansé et présente une épaisseur comprise entre 1,4 et 1,7 mm.

L'opercule présente de sa face supérieure en regard du support, en direction de sa face inférieure en regard du buvant du pot :
- une feuille d'aluminium ayant une épaisseur de 30 µm,
- un film de renfort en PET d'une épaisseur de 4.5 µm,
- un film thermoscellant du type PE.

La feuille d'aluminium et le film de renfort PET sont rendus solidaires au moyen d'une couche liante.

Selon l'invention, le support et l'opercule sont associés au moyen d'un film adhésif temporaire extrudé du type polyéthylène, chacune des deux faces du film ayant un pouvoir collant différent, la face la plus collante étant appliquée sur la surface inférieure du support, tandis que la face la moins collante est appliquée sur la face supérieure de l'opercule.

En pratique, ces joints sont positionnés tels quels au fond du bouchon, le bouchon étant ensuite vissé ou clipsé, selon les cas, sur le col du récipient. Le thermoscellage du joint est effectué par induction.

Lorsque que l'on procède pour la première fois à l'ouverture du récipient, le support inséré au fond du bouchon se désolidarise de l'opercule resté scellé sur le buvant. Ce n'est qu'ensuite que l'opercule est retiré par le consommateur, l'étanchéité, en position fermée du récipient, n'étant plus alors assurée que par la partie support du joint venant plaquer par compression sur le buvant.

Comme expliqué précédemment, l'opercule peut être retiré par le consommateur soit en saisissant la périphérie de l'opercule débordant du buvant soit en perçant l'opercule avec le doigt, sensiblement en son centre.

Du fait de la présence du film de renfort combiné à son épaisseur, l'opercule peut être retiré sans laisser de trace métallique sur le buvant et potentiellement en une seule étape.

L'invention et les avantages qui en découlent ressortent bien de la description qui précède. On note en particulier la possibilité de proposer dans un joint double pièce, un opercule pelable en une fois, ne laissant pas de traces métalliques sur le buvant du récipient évitant ainsi tout risque de contamination des denrées du type par exemple café lyophilisé ou encore pâte à tartiner qu'il peut contenir.

## Revendications

1. Joint double pièce thermoscellant pour l'obturation d'un récipient à fermeture par bouchon ou capsule, comprenant un support rendu solidaire, au moyen d'un adhésif temporaire, d'un opercule dépourvu de languette et comprenant une feuille en matériau conducteur munie sur sa face inférieure d'un film de renfort d'une épaisseur inférieure à 6 µm, sur la face inférieure duquel est appliqué un film thermoscellant destiné à être en contact avec le buvant dudit récipient.

2. Joint selon la revendication 1, **caractérisé en ce que** le film de renfort a une épaisseur comprise entre 4 et 6 µm, avantageusement égale à 4.5 µm.

3. Joint selon l'une des revendications précédentes, **caractérisé en ce que** le film de renfort est réalisé en un matériau choisi dans le groupe comprenant le polyester (PET), le polypropylène bi-orienté, le polyamide bi-orienté et le PET bi-orienté.

4. Joint selon l'une des revendications précédentes, **caractérisé en ce que** la feuille en matériau conducteur est une feuille en aluminium.

5. Joint selon l'une des revendications précédentes, **caractérisé en ce que** la feuille en matériau conducteur a une épaisseur comprise entre 20 et 40 µm.

6. Joint selon l'une des revendications précédentes, **caractérisé en ce que** le film thermoscellant est réalisé en un matériau du type polyoléfine, choisi dans le groupe comprenant l'EVA, le polyéthylène, le polypropylène ou PET, du type holt melt ou encore du type terpolymère ou ionomère.

7. Joint selon l'une des revendications précédentes, **caractérisé en ce que** le support est réalisé en un matériau compressible avec mémoire de reprise, notamment en polyéthylène expansé ou en polypropylène expansé.

8. Joint selon l'une des revendications 1 à 6, **caractérisé en ce que** le support est réalisé en papier.

9. Utilisation du joint selon l'une des revendications 1 à 8 pour le scellage de récipient en verre contenant des produits secs.

## Patentansprüche

1. Zweiteilige Heißsiegeldichtung zum Verschließen eines Behälters mit Verschluss durch einen Stopfen oder eine Kapsel, umfassend einen fest verbundenen Träger, mittels eines temporären Klebstoffs, mit einem Deckel ohne Lasche, der eine Folie aus leitfähigem Material umfasst, die auf ihrer Unterseite mit einer Verstärkungsfolie mit einer Dicke von weniger als 6 µm bereitgestellt ist, auf deren Unterseite eine Heißsiegelschicht aufgebracht ist, die dazu bestimmt ist, mit dem Trinkrand des Behälters in Kontakt zu stehen.

2. Dichtung nach Anspruch 1, **dadurch gekennzeichnet, dass** die Verstärkungsfolie eine Dicke zwischen 4 und 6 µm, bevorzugt 4,5 µm, aufweist.

3. Dichtung nach einem der vorstehenden Ansprüche, **dadurch gekennzeichnet, dass** die Verstärkungsfolie aus einem Material hergestellt ist, das aus der Gruppe ausgewählt ist, die aus Polyester (PET), biaxial orientiertem Polypropylen, biaxial orientiertem Polyamid und biaxial orientiertem PET besteht.

4. Dichtung nach einem der vorstehenden Ansprüche, **dadurch gekennzeichnet, dass** die Folie aus leitfähigem Material eine Aluminiumfolie ist.

5. Dichtung nach einem der vorstehenden Ansprüche, **dadurch gekennzeichnet, dass** die Folie aus leitfähigem Material eine Dicke zwischen 20 und 40 µm aufweist.

6. Dichtung nach einem der vorstehenden Ansprüche, **dadurch gekennzeichnet, dass** die Heißsiegelfolie aus einem Material vom Typ Polyolefin, ausgewählt aus der Gruppe bestehend aus EVA, Polyethylen, Polypropylen oder PET, vom Typ Hotmelt oder auch vom Typ Terpolymer oder auch Ionomer hergestellt ist.

7. Dichtung nach einem der vorstehenden Ansprüche, **dadurch gekennzeichnet, dass** der Träger aus einem komprimierbaren Material mit Formgedächtnis hergestellt ist, insbesondere aus expandiertem Polyethylen oder expandiertem Polypropylen.

8. Dichtung nach einem der Ansprüche 1 bis 6, **dadurch gekennzeichnet, dass** der Träger aus Papier hergestellt ist.

9. Verwendung der Dichtung nach einem der Ansprüche 1 bis 8 zum Verschließen von Glasbehältern, die Trockenprodukte enthalten.

## Claims

1. A heat-sealing two-piece seal for sealing a container having a stopper or a cap-type closure, comprising a support secured, by means of a temporary adhesive, to a lid with no tab, and comprising a sheet of conductive material, provided on its lower face with a reinforcing film having a thickness smaller than 6 µm, on the lower face of which a heat-sealing film is applied, intended to be in contact with the mouth of said container.

2. The seal according to claim 1, **characterised in that** the reinforcing film has a thickness of between 4 and 6 µm, advantageously equal to 4.5 µm.

3. The seal according to one of the preceding claims, **characterised in that** the reinforcing film is made of a material selected from the group comprising polyester (PET), bi-oriented polypropylene, bi-oriented polyamide and bi-oriented PET.

4. The seal according to one of the preceding claims, **characterised in that** the sheet of conductive material is an aluminium sheet.

5. The seal according to one of the preceding claims, **characterised in that** the sheet of conductive material has a thickness of between 20 and 40 µm.

6. The seal according to one of the preceding claims, **characterised in that** the heat-sealing film is made of a polyolefin-type material, selected from the group comprising EVA, polyethylene, polypropylene or PET, of the hot melt type or also of the terpolymer or ionomer type.

7. The seal according to one of the preceding claims, **characterised in that** the support is made of a compressible material with recovery memory, in particular made of expanded polyethylene or of expanded polypropylene.

8. The seal according to one of claims 1 to 6, **characterised in that** the support is made of paper.

9. A use of the seal according to one of claims 1 to 8 for sealing a glass container containing dry products.
